# EUROPEAN PATENT SPECIFICATION

(11) **EP 1 189 852 B1**
(45) Date of publication and mention of the grant of the patent: **14.04.2004**
(21) Application number: 00927513.2
(22) Date of filing: 05.05.2000
(51) Int. Cl.: C04B 35/563, C04B 35/634, C04B 35/636

(54) **BORON CARBIDE CAST BODIES**
BORKARBIDGIESSKÖRPER
CORPS COULIS A BASE DE CARBURE DE BORE

(30) Priority: 07.05.1999 GB 9910480
(43) Date of publication of application: 27.03.2002
(73) Proprietor: THE SECRETARY OF STATE FOR DEFENCE, London SW1A 2HB (GB)
(72) Inventor: Taylor, Richard Nigel Julian, Bramley Hampshire RG26 5UX (GB); Fisher, Stuart Charles, Dorchester DT2 9LQ (GB)
(74) Representative: Skelton, Stephen Richard
(86) International application number: PCT/GB2000/001724
(87) International publication number: WO 2000/068165

(56) References cited:
- EP-A- 0 002 067
- GB-A- 2 014 193
- P.D. WILLIAMS ET AL.: J. AMERICAN CERAMIC SOCIETY, vol. 74, no. 7, 1991, pages 1614-1618, XP002143665 US cited in the application

## Description

This invention relates to the making of boron carbide cast bodies suitable for sintering.

Boron carbide is an extremely hard substance, with a hardness exceeded only by diamond and cubic boron nitride. However, it has hitherto proved difficult to utilise the full potential of the material as a result of the difficulties met in manufacturing shaped articles. An essential step in the production of articles is the formation of the cast body (or green body).

Of the known prior art methods of forming solid bodies from boron carbide many methods involve the application of high pressures (many hundreds of bar) to solid boron carbide powder or granules (for example, see International Patent Application No. PCT/GB95/02029). Such methods require the use of expensive hyperbaric equipment and often require the formation of boron carbide granules. Additionally, such methods often require the use of harmful organic solvents and resins which are potentially damaging to both operators and the environment. Such methods also do not always enable satisfactory reproduction of detail, especially when the die shape is complex, due to the fact that the boron carbide is essentially solid and thus does not flow to fill the die. Liquid slurries of boron carbide have been used (*J. American Ceram. Soc*., **74**(7), p. 1614-1618) so that hyperbaric conditions do not have to be utilised. However, this process did not involve the use of an added binder or carbon source and the simple, sintered geometrical bodies so produced achieved only 63% of the maximum density. Extensive washing of the boron carbide was necessary as was control of the pH of the slurry.

According to the present invention a method of making a boron carbide cast body suitable for sintering including the successive steps of mixing boron carbide particles with an aqueous binder system to form a homogenised slurry mixture; casting the mixture into the required shape; and drying the mixture, wherein the boron carbide particles have a median particle size in the range 1.5 to 3.5 µm.

This method ensures excellent reproduction of cast detail without using potentially harmful organic liquids. There is no requirement to granulate the powder/binder mixture and there is no need to subject the system to high pressures, however, that method of manufacture remains an option because the aqueous slurries produced can be granulated by spray drying or freeze drying.

The specific area of the boron carbide particles is preferably greater than 7 m²/g and typically in the range of 7 m²/g to 12 m²/g. This produces a relatively high density body after sintering.

In a preferred embodiment, the boron carbide particles have a median particle size in the range 1.5 to 3.5µm. Preferably at least 95% of the mass is less than 12.7µm. Use of such small particles enables achievement of a high density sintered body.

The boron:carbon atomic ratio is preferably between 3.7:1 and 4.4:1 in order that the boron carbide in the cast body can be sintered to a high density.

The boron carbide is preferably more than 99.3% pure excluding boron oxide and boron nitride, or more than 97% pure including boron oxide and boron nitride.

In one embodiment, the binder system comprises a binder and a plasticiser. The plasticiser is chosen to increase the strength of the cast body so that it is less likely to suffer damage prior to sintering. The binder causes the boron carbide particles to aggregate in a satisfactory manner and adds carbon to the body during the sintering process.

The plasticiser is preferably chosen from one or more of glycerol, a low molecular weight polyethylene glycol and a low molecular weight polypropylene glycol. These compounds are cheap, readily-available and of low toxicity.

In another embodiment, the binder system includes a dispersant. The dispersant ensures that the boron carbide particles do not form large aggregates which would not remain satisfactorily in suspension.

The dispersant is preferably chosen from one or more of a water-soluble copolymer based on acrylic ester, a salt of a polymeric carboxylic acid, a sodium dioctyl sulphosuccinate, a stearate and Synperionic N™ wetting agent. These compounds are cheap, readily-available and of low toxicity.

In a preferred arrangement, the binder is chosen from one or more of sucrose, dextrose, glucose, a water-soluble polymer based on acrylic acid, a water-soluble polymer based on acrylamide, a water-soluble polymer based on methacrylic acid, polyvinyl alcohol, a high molecular weight polyethylene glycol and a high molecular weight polypropylene glycol. These binders are cheap, readily-available and of low toxicity.

The mixing is chosen from any one of ball milling, stirring or mechanical mixing with a beater. All of these methods are well-known and have proved to be successful.

The homogenised mixture is preferably de-aerated prior to the forming of the mixture into the required shape. This reduces the incidence of undesirable voids occurring within the cast body. De-aeration is preferably by vacuum.

Forming the mixture into the required shape preferably comprises the pouring of the homogenised mixture into a non-porous mould. Preferably, the mould comprises a non-porous material inner surface. Alternatively, the non-porous material is a lining internally of the mould. Non-porous moulds are more readily reusable than porous moulds. Non-porous moulds are especially effective if the inner surface of the mould is treated with a mould release agent prior to pouring the mixture into the mould.

The non-porous material is chosen from any one of polyurethane, silicone rubber, glass and polymethylmethacrylate. These materials are cheap, available and can be readily formed into moulds.

However, forming the mixture into the required shape can comprise the pouring of the homogenised mixture into a porous mould.

In one embodiment, the drying process comprises drying at a temperature greater than ambient. The drying process can also comprise use of a desiccating substance.

The invention will now be described, by way of example only, with reference to the accompanying drawings, of which
Figure 1 is a flow chart of a method in accordance with the present invention;
Figure 2 is an image of a sintered body (in this case, a Dutch domino) which was cast using a method in accordance with the present invention (dimensions of sintered body: ≈30mm x ≈20mm); and
Figure 3 shows, on the left, an image of a cast body produced using a method in accordance with the present invention and, on the right, an image of a sintered body derived from a cast body identical to that shown on the left (dimensions of sintered body: ≈30mm x ≈20mm).

In all the examples given below the boron carbide particles have a median particle size in the range 1.5 to 3.5µm where at least 95% of the mass is less than 12.7µm. The atomic ratio of boron to carbon is in the range 3.7:1 and 4.4:1. The boron carbide is more than 99.3% pure excluding boron oxide and boron nitride, or more than 97% pure including boron oxide and boron nitride.

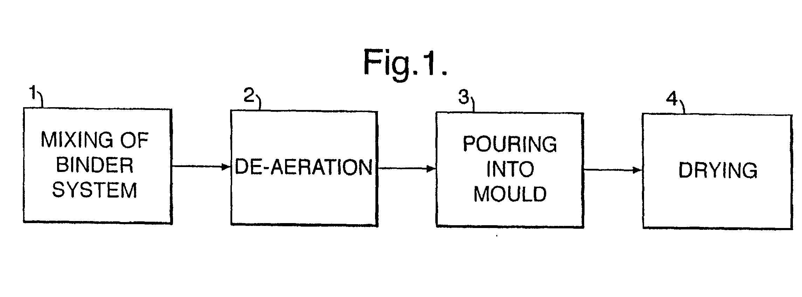

A method for preparing cast bodies according to the present invention (Figure 1) starts with the mixing 1 of the binder system. In this example 300g of commercially available boron carbide powder are mixed with 3g of Synperionic N™ in a mechanical mixer for 5 minutes with 40g of water. This forms the boron carbide slurry. The boron carbide powder typically has a specific surface area in the range 7-12m²/g. The Synperionic N™ acts as a dispersant, probably by coating the boron carbide particles such that the particles do not form undesirable large aggregates which fall out of suspension. In a separate receptacle, a solution of 20g of an acrylic binder (Glascol HA4 available from Allied Colloids) in 40g of water is mixed with 9g of polyethylene glycol. The binder/polyethylene glycol mixture is then added to 40g of water. The molecular weight of the polyethylene glycol is about 200 (PEG 200), this being typical of a low molecular weight polymer used as a plasticiser. This binder/polyethylene glycol/water system is then mixed by a method well-known in the art and added to the boron carbide slurry. Mixing is then carried out for a further ten minutes. The resulting dispersant/plasticiser/boron carbide slurry is then decanted into a glass beaker and de-aerated 2 under vacuum until no gas bubbles are visible in the slurry. The slurry is then poured into a polyurethane mould 3 and allowed to dry 4 under ambient conditions. The cast body can be removed from the mould and is then suitable for sintering, for example as described in International Patent Application No. PCT/GB95/02029.

The de-aeration process 2 minimises the incidence of undesirable voids which may form in the cast body. Such voids decrease strength and may cause loss of detail, since they will not be removed in any subsequent sintering process. The low molecular weight polyethylene glycol acts as a plasticiser which gives strength to the cast body. This decreases the likelihood of damaging the body prior to sintering. The polyurethane mould is non-porous and, hence, adhesion may occur between the mould and the cast body. Such adhesion may lead to damage of the cast body when it is removed from the mould. Coating of the internal surface of the mould with a mould release agent will improve performance when compared with the uncoated mould. Drying 4 takes place by evaporation of water from the slurry via open orifices present in the mould.

In an alternative method according to the present invention, the binder system is first prepared by adding 26g of sucrose to 60g of water and then mixing 1 in a mechanical mixer for 5 minutes: 300g of boron carbide powder having a surface area in the range 7-12m²/g, are then added to the sucrose solution and mixing is continued for another 10 minutes.

This slurry is then decanted into a glass beaker and de-aerated 2 under vacuum until no bubbles are visible in, or on the surface of, the slurry. The de-aerated slurry is poured into a glass mould 3 lined with polymethylmethacrylate and allowed to dry under ambient conditions. After 3 hours, the mould is placed in an oven and the slurry/cast body is oven dried at 60°C for 2 hours. The cast body can then be removed from the mould and is suitable for sintering.

In this example, the sucrose acts as the binder system. The polymethylmethacrylate lining is an example of a non-porous mould lining. Oven drying accelerates the drying process 4 and helps to harden the cast body.

Both of these methodologies, as described, use non-porous moulds or mould linings; it is possible to obtain adequate performance using porous moulds.

The two methodologies presented above give densities in the cast bodies in excess of 60% (typically about 70-80%) from which sintered densities of over 94% have been obtained.

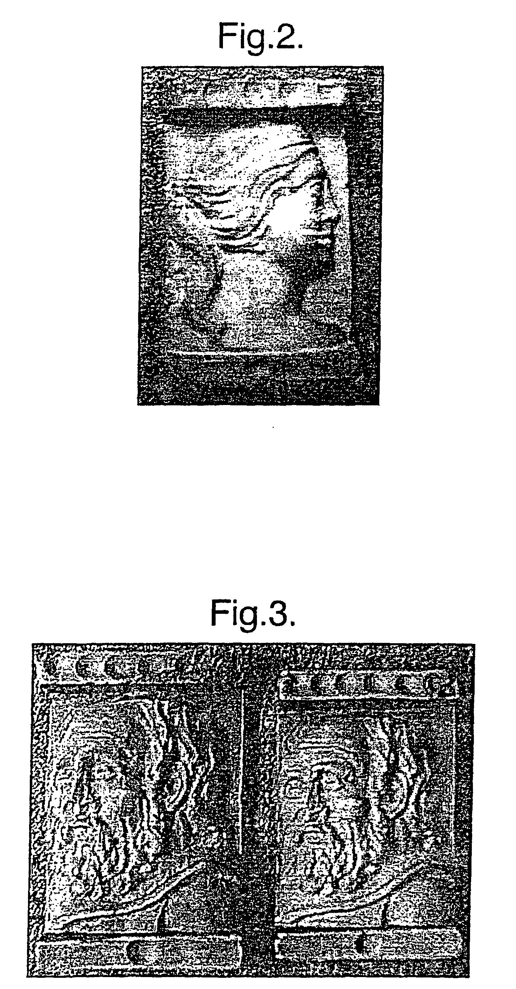

Various further examples of how the invention may be performed are listed at c. to 1. below. Examples a. & b. are provided for comparative purposes.
a. 100g of boron carbide powder, having a surface area in the range of 7-12m²/g, is mixed with 20g of a 30% acrylic binder (Glascol HA4 available from Allied Colloids) solution and 30g of water. The slurry is then dried in air under ambient conditions and granulated through a 1mm mesh nylon sieve. The resultant granules are die pressed in a 25mm diameter uniaxial steel die under 12 tons for 15 seconds. The pressed pieces are then sintered as described in Int Patent No. PCT/GB95/02029, by RNJ Taylor *et al*.
b. 100g of boron carbide powder, having a surface area in the range of 7-12m²/g, is mixed with 13g of sucrose and 100g of water in a mechanical mixer. The slurry is then continuously stirred whilst spray drying is used to produce dried granules. The resultant granules are die pressed in a 25mm diameter uniaxial steel die under 12 tons for 15 seconds. The pressed pieces are then sintered as described in Int Patent No. PCT/GB95/02029, by RNJ Taylor *et al*.
c. 50g of boron carbide powder, having a surface area in the range of 7-12m²/g, is mixed with 0.8g of an ammonium salt of a polymeric carboxylic acid (Dispex A40 available from Allied Colloids), 1.8g of ammonia and 10g of a 30% acrylic binder (Glascol HA4 available from Allied (colloids) solution in a mechanical mixer for 15 minutes with 100 g of water. The slurry is then poured into porous Plaster of Paris moulds and allowed to dry under ambient conditions. The cast pieces are then sintered as described in Int Patent No. PCT/GB95/02029, by RNJ Taylor *et al*.
d. 1500g of boron carbide powder, having a surface area in the range of 7-12m²/g, is mixed with 204g of sucrose and 7.5g an ammonium salt of a polymeric carboxylic acid in a mechanical mixer for 30 minutes with 570g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
e. 200g of boron carbide powder, having a surface area in the range of 7-12m²/g, is mixed with 2g of Synperionic N™ and 20g of a 30% acrylic binder (Glascol HA4 available from Allied Colloids) solution and 6g PEG200 in a mechanical mixer for 15 minutes with 40g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
f. 200g of boron carbide powder, having a surface area in the range of 7-12m²/g, is mixed with 2g of Synperionic N™ and 20g of a 30% acrylic binder (Glascol HA4 available from Allied Colloids) solution and 6g PEG200 in a mechanical mixer for 15 minutes with 40g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
g. 300g of boron carbide powder, having a surface area in the range of 7-12m²/g, is mixed with 3g of Synperionic N™ and 30g of a 30% polyvinyl alcohol solution and 9g PEG200 in a ball mill for 210 minutes with 80g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
h. 765g of boron carbide powder, having a surface area in the range of 7-12m²/g, is mixed with 104g of sucrose and 15g of tetramethylammonium hydroxide TMAH in a mechanical mixer for 30 minutes with 450g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
i. 300g of boron carbide powder, having a surface area in the range of 7-12m²/g, is mixed with 3g of Synperionic N™ and 26g of sucrose and 9g glycerol in a mechanical mixer for 15 minutes with 100g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
j. 300g of boron carbide powder, having a surface area in the range of 7-12m²/g, is mixed with 3g of Synperionic N™ and 16g of sucrose and 6g glycerol in a mechanical mixer for 15 minutes with 65g of water. The slurry is decanted into a glass beaker and de-aerated under vacuum until no bubbles are formed. The slurry is then poured into a polyurethane mould and allowed to dry under ambient conditions. The slurry is also cast into a Plaster of Paris mould and allowed to dry under ambient conditions. The cast pieces are then sintered as described in Int Patent No. PCT/GB95/02029, by RNJ Taylor *et al*.
k. 300g of boron carbide powder, having a surface area in the range of 7-12m²/g, is mixed with 26g of sucrose and 6g glycerol in a mechanical mixer for 15 minutes with 75g of water. The slurry is decanted into a glass beaker and de-aerated under vacuum until no bubbles are formed. The slurry is then poured into a polyurethane mould and allowed to dry under ambient conditions. The cast pieces are then sintered as described in Int Patent No. PCT/GB95/02029, by RNJ Taylor *et al*.
l. 300g of boron carbide powder, having a surface area in the range of 7-12m²/g, is mixed with 38g of sucrose in a mechanical mixer for 15 minutes with 80g of water. The slurry is decanted into a glass beaker and de-aerated under vacuum until no bubbles are formed. The slurry is then poured into a polyurethane and polycarbonate moulds and allowed to dry under ambient conditions. The cast pieces are then sintered as described in Int Patent No. PCT/GB95/02029, by RNJ Taylor *et al*.
All of these examples will yield a green density of >60% theoretical leading to a sintered density of >93% density provided that the sintering conditions stated in Int Patent No. PCT/GB95/02029, by RNJ Taylor *et al* are followed. These methods have been used to prepare the demonstrators shown in Figures 1 and 2.

Figure 2 shows an image of a sintered body (in this case, a Dutch domino) which was cast using a method in accordance with the present invention. This illustrates that the method in accordance with the present invention can give excellent reproduction of fine detail, with no undesirable voids being apparent. Figure 3 shows, on the left, an image of a cast body produced using a method in accordance with the present invention and, on the right, an image of a sintered body derived from an identical cast body to that shown on the left. This indicates that fine detail is reproduced both in the cast body and in the sintered body. The sizes of the two bodies indicate the degree of shrinkage that occurs on sintering. The manufacture of the dominoes is merely exemplary of the method in accordance with the present invention. Sintered boron carbide bodies manufactured using the method may be used, *inter alia*, for armour, machine parts and aeroengine components where the hardness of the material can be fully utilised.

## Claims

1. A method of making a boron carbide cast body suitable for sintering including the successive steps of mixing boron carbide particles with an aqueous binder system to form a homogenised slurry mixture; casting the mixture into the required shape; and drying the mixture, wherein the boron carbide particles have a median particle size in the range 1.5 to 3.5µm.

2. A method of making a boron carbide cast body according to Claim 1 wherein the specific area of the boron carbide particles is greater than 7 m²/g.

3. A method of making a boron carbide cast body according to either of Claims 1 and 2, wherein the boron:carbon ratio is between 3.7:1 and 4.4:1.

4. A method of making a boron carbide cast body according to any one preceding claim wherein the boron carbide is more than 99.3% pure excluding boron oxide or boron nitride, or more than 97% pure including boron oxide and boron nitride.

5. A method of making a boron carbide cast body according to any one preceding claim wherein the binder system comprises a binder and a plasticiser.

6. A method of making a boron carbide cast body according to Claim 5 wherein the plasticiser is chosen from one or more of glycerol, a low molecular weight polyethylene glycol and a low molecular weight polypropylene glycol.

7. A method of making a boron carbide cast body according to any one of Claims 1 to 6 wherein the binder system includes a dispersant.

8. A method of making a boron carbide cast body according to Claim 7 wherein the dispersant is one or more of a water-soluble copolymer based on acrylic ester, a salt of a polymeric carboxylic acid, a sodium dioctyl sulphosuccinate, a stearate and Synperionic N™ wetting agent.

9. A method of making a boron carbide cast body according to any one of Claims 1 to 8 wherein the binder is chosen from one or more of sucrose, dextrose, glucose, polyvinyl alcohol, a water-soluble polymer based on acrylic acid, a water-soluble polymer based on acrylamide, a water-soluble polymer based on methacrylic acid, a high molecular weight polyethylene glycol and a high molecular weight polypropylene glycol.

10. A method of making a boron carbide cast body according to any preceding Claim wherein the mixing is chosen from any one of ball milling, stirring or mechanical mixing with a beater.

11. A method of making a boron carbide cast body according to any preceding Claim wherein the drying process comprises drying at a temperature greater than ambient.

12. A method of making a boron carbide cast body according to any preceding Claim wherein the drying process comprises use of a desiccating substance.

13. A method of making a boron carbide cast body according to any preceding Claim wherein forming the mixture into the required shape comprises the pouring of the homogenised mixture into a non-porous mould.

14. A method of making a boron carbide cast body according to Claim 13 wherein the mould comprises a non-porous material inner surface.

15. A method of making a boron carbide cast body according to Claim 14 wherein the non-porous material is a lining internally of the mould.

16. A method of making a boron carbide cast body according to any one of Claims 13 to 15 wherein the non-porous material is chosen from any one of polyurethane, silicone rubber, glass and polymethylmethacrylate.

17. A method of making a boron carbide cast body according to any one of Claims 1 to 12 wherein forming the mixture into the required shape comprises the pouring of the homogenised mixture into a porous mould.

18. A method of making a boron carbide cast body according to any preceding Claim wherein the homogenised mixture is de-aerated prior to the forming of the mixture into the required shape.

19. A method of making a boron carbide cast body according to Claim 18 wherein the homogenised mixture is de-aerated by vacuum.

20. An article obtainable by a method in accordance with any one of Claims 1 to 19.

## Patentansprüche

1. Verfahren zur Herstellung eines zum Sintern geeigneten Borcarbid-Gußkörpers, bei dem man Borcarbidteilchen mit einer mittleren Teilchengröße im Bereich von 1,5 bis 3,5 µm mit einem wäßrigen Bindemittelsystem vermischt, wobei man eine homogenisierte Aufschlämmungsmischung erhält, die Mischung durch Gießen in die geforderte Form bringt und die Mischung trocknet.

2. Verfahren zur Herstellung eines Borcarbid-Gußkörpers nach Anspruch 1, bei dem die spezifische Oberfläche der Borcarbidteilchen größer als 7 m²/g ist.

3. Verfahren zur Herstellung eines Borcarbid-Gußkörpers nach Anspruch 1 oder 2, bei dem das Bor/Kohlenstoff-Verhältnis zwischen 3,7:1 und 4,4:1 liegt.

4. Verfahren zur Herstellung eines Borcarbid-Gußkörpers nach einem der vorhergehenden Ansprüche, bei dem das Borcarbid eine Reinheit von mehr als 99,3% unter Ausschluß von Boroxid oder Bornitrid oder eine Reinheit von mehr als 97% unter Einbeziehung von Boroxid und Bornitrid aufweist.

5. Verfahren zur Herstellung eines Borcarbid-Gußkörpers nach einem der vorhergehenden Ansprüche, bei dem das Bindemittelsystem ein Bindemittel und einen Weichmacher enthält.

6. Verfahren zur Herstellung eines Borcarbid-Gußkörpers nach Anspruch 5, bei dem man den Weichmacher unter Glycerin, einem niedermolekularen Polyethylenglykol und/oder einem niedermolekularen Polypropylenglykol auswählt.

7. Verfahren zur Herstellung eines Borcarbid-Gußkörpers nach einem der Ansprüche 1 bis 6, bei dem das Bindemittelsystem ein Dispergiermittel enthält.

8. Verfahren zur Herstellung eines Borcarbid-Gußkörpers nach Anspruch 7, bei dem man als Dispergiermittel ein wasserlösliches Copolymer auf Acrylesterbasis, ein Salz einer polymeren Carbonsäure, ein Natriumdioctylsulfosuccinat, ein Stearat und/oder ein Synperionic-N™-Netzmittel verwendet.

9. Verfahren zur Herstellung eines Borcarbid-Gußkörpers nach einem der Ansprüche 1 bis 8, bei dem man das Bindemittel unter Saccharose, Dextrose, Glucose, Polyvinylalkohol, einem wasserlöslichen Polymer auf Acrylsäurebasis, einem wasserlöslichen Polymer auf Acrylamidbasis, einem wasserlöslichen Polymer auf Methacrylsäurebasis, einem hochmolekularen Polyethylenglykol und/oder einem hochmolekularen Polypropylenglykol auswählt.

10. Verfahren zur Herstellung eines Borcarbid-Gußkörpers nach einem der vorhergehenden Ansprüche, bei dem man das Mischen durch Mahlen in einer Kugelmühle, Rühren oder mechanisches Mischen mit einer Schlagwerksmühle durchführt.

11. Verfahren zur Herstellung eines Borcarbid-Gußkörpers nach einem der vorhergehenden Ansprüche, bei dem man bei einer über Umgebungstemperatur liegenden Temperatur trocknet.

12. Verfahren zur Herstellung eines Borcarbid-Gußkörpers nach einem der vorhergehenden Ansprüche, bei dem man beim Trocknen eine entwässernd wirkende Substanz verwendet.

13. Verfahren zur Herstellung eines Borcarbid-Gußkörpers nach einem der vorhergehenden Ansprüche, bei dem man beim Bringen der Mischung in die geforderte Form die homogenisierte Mischung in ein nichtporöses Formwerkzeug gießt.

14. Verfahren zur Herstellung eines Borcarbid-Gußkörpers nach Anspruch 13, bei dem das Formwerkzeug eine Innenfläche aus nichtporösem Material aufweist.

15. Verfahren zur Herstellung eines Borcarbid-Gußkörpers nach Anspruch 14, bei dem es sich bei dem nichtporösen Material um eine Innenauskleidung des Formwerkzeugs handelt.

16. Verfahren zur Herstellung eines Borcarbid-Gußkörpers nach einem der Ansprüche 13 bis 15, bei dem man das nichtporöse Material unter Polyurethan, Silikonkautschuk, Glas und Polymethylmethacrylat auswählt.

17. Verfahren zur Herstellung eines Borcarbid-Gußkörpers nach einem der Ansprüche 1 bis 12, bei dem man beim Bringen der Mischung in die geforderte Form die homogenisierte Mischung in ein poröses Formwerkzeug gießt.

18. Verfahren zur Herstellung eines Borcarbid-Gußkörpers nach einem der vorhergehenden Ansprüche, bei dem man die homogenisierte Mischung vor dem Bringen der Mischung in die geforderte Form entlüftet.

19. Verfahren zur Herstellung eines Borcarbid-Gußkörpers nach Anspruch 18, bei dem man die homogene Mischung mittels Vakuum entlüftet.

20. Gegenstand, der nach einem Verfahren nach einem der Ansprüche 1 bis 19 erhältlich ist.

## Revendications

1. Méthode de fabrication d'un moulage en carbure de bore convenant au frittage, comprenant les étapes successives qui consistent à mélanger les particules de carbure de bore avec un système liant aqueux pour former un mélange homogénéisé sous forme de suspension, à mouler le mélange pour obtenir la forme souhaitée, et à sécher le mélange, dans laquelle les particules de carbure de bore ont une granulométrie médiane dans la plage de 1,5 à 3,5 µm.

2. Méthode de fabrication d'un moulage en carbure de bore selon la revendication 1, dans laquelle la surface effective des particules en carbure de bore est supérieure à 7 m²/g.

3. Méthode de fabrication d'un moulage en carbure de bore selon la revendication 1 ou la revendication 2, dans laquelle le rapport bore:carbone se situe entre 3,7:1 et 4,4:1.

4. Méthode de fabrication d'un moulage en carbure de bore selon l'une quelconque des revendications précédentes, dans laquelle la pureté du carbure de bore est supérieure à 99,3 % à l'exclusion de l'oxyde de bore ou du nitrure de bore, ou supérieure à 97 % y compris l'oxyde de bore et le nitrure de bore.

5. Méthode de fabrication d'un moulage en carbure de bore selon l'une quelconque des revendications précédentes, dans laquelle le système liant comprend un liant et un plastifiant.

6. Méthode de fabrication d'un moulage en carbure de bore selon la revendication 5, dans laquelle le plastifiant sélectionné consiste en l'un ou plusieurs des éléments du groupe constitué du glycérol, d'un polyéthylène-glycol de faible poids moléculaire et d'un polypropylène-glycol de faible poids moléculaire.

7. Méthode de fabrication d'un moulage en carbure de bore selon l'une quelconque des revendications 1 à 6, dans laquelle le système liant contient un dispersant.

8. Méthode de fabrication d'un moulage en carbure de bore selon la revendication 7, dans laquelle le dispersant consiste en l'un ou plusieurs des éléments du groupe constitué d'un copolymère hydrosoluble à base d'ester acrylique, d'un sel d'un acide carboxylique polymère, d'un dioctyle-sulfosuccinate de sodium, d'un stéarate et d'un agent mouillant Synperionic N™.

9. Méthode de fabrication d'un moulage en carbure de bore selon l'une quelconque des revendications 1 à 8, dans laquelle le liant sélectionné consiste en l'un ou plusieurs des éléments du groupe constitué du saccharose, du dextrose, du glucose, de l'alcool polyvinylique, d'un polymère hydrosoluble à base d'acide acrylique, d'un polymère hydrosoluble à base d'acrylamide, d'un polymère hydrosoluble à base d'acide méthacrylique, d'un polyéthylène-glycol de poids moléculaire élevé et d'un polypropylène-glycol de poids moléculaire élevé.

10. Méthode de fabrication d'un moulage en carbure de bore selon l'une quelconque des revendications précédentes, dans laquelle le mélange a lieu par l'une quelconque des méthodes consistant à employer un broyeur à billes, à agiter, ou à mélanger mécaniquement avec un batteur.

11. Méthode de fabrication d'un moulage en carbure de bore selon l'une quelconque des revendications précédentes, dans laquelle le procédé de séchage comprend un séchage à une température supérieure à la température ambiante.

12. Méthode de fabrication d'un moulage en carbure de bore selon l'une quelconque des revendications précédentes, dans laquelle le procédé de séchage comprend l'emploi d'une substance déshydratante.

13. Méthode de fabrication d'un moulage en carbure de bore selon l'une quelconque des revendications précédentes, dans laquelle le formage du mélange pour obtenir la forme souhaitée comprend le versement du mélange homogénéisé dans un moule non poreux.

14. Méthode de fabrication d'un moulage en carbure de bore selon la revendication 13, dans laquelle le moule comprend une surface interne constituée d'un matériau non poreux.

15. Méthode de fabrication d'un moulage en carbure de bore selon la revendication 14, dans laquelle le matériau non poreux est un revêtement interne du moule.

16. Méthode de fabrication d'un moulage en carbure de bore selon l'une quelconque des revendications 13 à 15, dans laquelle le matériau non poreux sélectionné consiste en l'un quelconque des éléments du groupe constitué du polyuréthane, du caoutchouc silicone, du verre et du polyméthylméthacrylate.

17. Méthode de fabrication d'un moulage en carbure de bore selon l'une quelconque des revendications 1 à 12, dans laquelle le formage du mélange pour obtenir la forme souhaitée comprend le versement du mélange homogénéisé dans un moule poreux.

18. Méthode de fabrication d'un moulage en carbure de bore selon l'une quelconque des revendications précédentes, dans laquelle le mélange homogénéisé est désaéré avant le formage du mélange pour obtenir la forme souhaitée.

19. Méthode de fabrication d'un moulage en carbure de bore selon la revendication 18, dans laquelle le mélange homogénéisé est désaéré sous vide.

20. Article pouvant être obtenu par une méthode selon l'une quelconque des revendications 1 à 19.
